# EUROPEAN PATENT SPECIFICATION

(11) **EP 4 358 204 B1**
(45) Date of publication and mention of the grant of the patent: **31.12.2025**
(21) Application number: 22881421.6
(22) Date of filing: 14.10.2022
(51) Int. Cl.: H01M 10/04, H01M 50/528, B23K 26/22, B23K 26/06, B23K 26/14, B23K 26/244, B23K 26/32, B23K 37/04, B23K 101/36

(54) **WELDING MASK**
SCHWEISSMASKE
MASQUE DE SOUDAGE

(30) Priority: 14.10.2021 KR 20210136996; 29.09.2022 KR 20220123919
(43) Date of publication of application: 24.04.2024
(73) Proprietor: LG Energy Solution, Ltd., Seoul 07335 (KR)
(72) Inventor: KIM, Min-Tae, Daejeon 34122 (KR); KIM, Min-Woo, Daejeon 34122 (KR); LEE, Jun-Oh, Daejeon 34122 (KR); HWANG, Joong-Ha, Daejeon 34122 (KR); KIM, Do-Gyun, Daejeon 34122 (KR); PARK, Kwang-Cheol, Daejeon 34122 (KR); LEE, Gil-Young, Daejeon 34122 (KR); LIM, Hae-Jin, Daejeon 34122 (KR); CHO, Kyung-Wook, Daejeon 34122 (KR)
(74) Representative: Goddar, Heinz J.
(86) International application number: PCT/KR2022/015644
(87) International publication number: WO 2023/063794

(56) References cited:
- WO-A1-2022/055278
- DE-A1- 102014 103 635
- JP-A- 2000 317 671
- JP-A- 2001 332 308
- JP-A- 2002 134 095
- JP-A- 2011 255 420
- JP-A- H09 174 262
- KR-A- 20150 084 270
- KR-A- 20170 050 440
- KR-A- 20170 050 440

## Description

The present invention relates to a welding mask, see claim 1.

The present application claims priority to Korean Patent Application No. 10-2021-0136996 filed on October 14, 2021 and Korean Patent Application No. 10-2022-0123919 filed on September 29, 2022 in the Republic of Korea.

### BACKGROUND ART

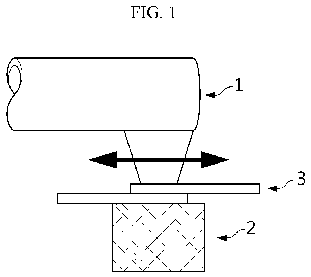

In the fabrication of a battery cell, for example, ultrasonic welding may be used to join an electrode assembly to a current collector plate and the current collector plate to a terminal. As shown in FIG. 1, the ultrasonic welding is a process of welding an object 3 using vibration of an ultrasonic welding horn 1 with the object 3 placed in contact with the ultrasonic welding horn 1 and an anvil 2 respectively on two sides.

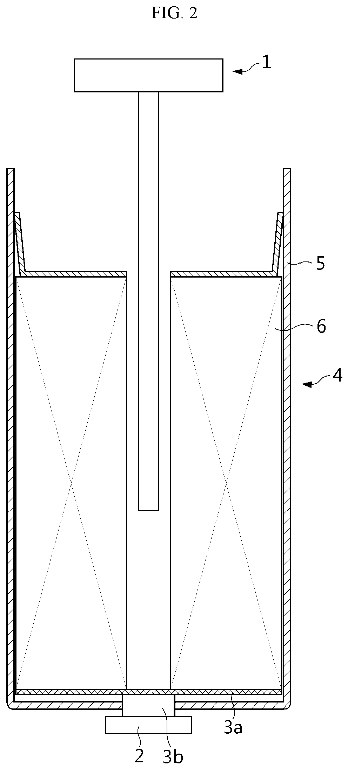

Referring to FIG. 2, in the battery cell 4, to weld the object 3 including the current collector 3a and the terminal 3b at a closed portion of a battery can 5 opposite an open portion on a side of the battery can 5, it is necessary to insert a welding tip of the ultrasonic welding horn 1 through a winding center hole of the electrode assembly 6. By this reason, the welding tip of the welding horn 1 has its extended length, and as a consequence, in the ultrasonic welding, the welding tip of the ultrasonic welding horn 1 may be bent or broken.

Moreover, when vibration for ultrasonic welding is applied in the narrow space within the winding center hole of the electrode assembly 6, the electrode assembly 6 may be damaged by interference between the inner wall of the winding center hole and the ultrasonic welding horn 1.

To weld the object 3 disposed at the closed portion of the battery can 5, the tool for welding is inserted through the winding center hole of the electrode assembly 6, which places many limitations in the welding, and likewise, resistance welding may encounter this challenge.

In view of this, laser welding that does not require the insertion of the tool for welding through the winding center hole of the electrode assembly 6 may be contemplated. However, laser welding also has limitations.

That is, in the battery cell 4 as shown in FIG. 2, when laser welding is used to weld the object 3 disposed at the closed portion of the battery can 5, it is necessary to prevent the contact between the inner wall of the winding center hole and the laser while the laser passes from the entrance of the winding center hole of the electrode assembly 6 having a small width to or near the exit. Additionally, in case that impurities such as weld spatter and welding fumes occurring in laser welding scatter to the inner wall of the electrode assembly 6, physical damage may occur to the electrode assembly 6, and metal impurities may cause an internal short circuit of the battery cell 4. Accordingly, there is a need for an approach to prevent damage to the electrode assembly 6 when welding the object 3 disposed inside of the battery cell 4 through laser welding.

Meanwhile, it is necessary to remove the oxygen atmosphere at or near the object 3 during laser welding. Accordingly, there is a need for an approach to easily feed a purging gas into or near the object to remove the oxygen atmosphere during laser welding.

KR 2017 0050440 A describes the preamble of claim 1.

In addition, in case that impurities occurring in welding are not properly removed when welding the object 3 through laser welding, there may be a focus error of the laser by interference of the impurities and the laser, failing to achieve smooth welding. Accordingly, there is a need for an approach to properly remove impurities occurring in laser welding.

### DISCLOSURE

### Technical Problem

The present invention is designed to solve the above-described problem, and therefore an object of the present invention is to prevent damage to an electrode assembly when welding an object disposed inside of a battery cell through laser welding.

In another aspect, an object of the present invention is to easily feed a purging gas into or near the object to remove the oxygen atmosphere at or near the object during laser welding.

In still another aspect, an object of the present invention is to properly remove impurities occurring when welding the object disposed inside of the battery cell through laser welding.

However, the technical problem of the present invention to be solved is not limited to the above-described problems, and these and other problems will be clearly understood by those skilled in the art from the following description.

### Technical Solution

To solve the above-described problem, a welding mask according to to the present invention is defined in claim 1, and includes a welding mask body having a laser passage portion configured to allow a laser emitted into a housing of a battery cell to pass therethrough, the welding mask body configured to cover an open portion on a side of the housing; and an insertion guide having a hollow structure, connected to the laser passage portion, and configured to be inserted into a winding center hole of an electrode assembly received in the housing.

The laser passage portion may have a larger width at an entrance than at an exit.

The insertion guide may be inserted through an entrance of the winding center hole and extended to an exit of the winding center hole opposite the entrance.

The welding mask may further include a gas guider configured to guide a flow of the purging gas in a direction toward a gap between the inner wall of the winding center hole and the insertion guide.

The insertion guide may include at least one gas inlet.

The gas inlet may have a notched shaped in an upward direction from a lowest end of the insertion guide.

The gas inlet may be spaced a predetermined distance in the upward direction apart from the lowest end of the insertion guide.

The welding mask may further include a mesh member configured to cover the gas inlet.

The lowest end of the insertion guide may be spaced apart from the object to be welded.

The welding mask may further include a sealing member configured to improve sealability at a coupled part of the welding mask body and the housing.

The welding mask body may further include a suction portion in communication with an internal space of the insertion guide.

### Advantageous Effects

According to an aspect of the present invention, it is possible to prevent damage to the electrode assembly when welding the object disposed inside of the battery cell through laser welding.

According to another aspect of the present invention, it is possible to easily feed the purging gas into or near the object to remove the oxygen atmosphere at or near the object during laser welding.

According to still another aspect of the present invention, it is possible to properly remove impurities occurring when welding the object disposed inside of the battery cell through laser welding.

However, the advantageous effect derived through the present invention is not limited to the above-described effects, and these and other effects will be clearly understood by those skilled in the art from the following description.

### DESCRIPTION OF DRAWINGS

The accompanying drawings illustrate an exemplary embodiment of the present invention and together with the following detailed description, serve to provide a further understanding of the technical aspects of the present disclosure, and thus, the present disclosure should not be construed as being limited to the drawings.
FIGS. 1 and 2 are diagrams illustrating a process of welding an object in a battery cell using ultrasonic welding.
FIG. 3 is a diagram showing an appearance of a welding mask of the present disclosure.
FIG. 4 is a diagram showing an internal structure of a welding mask of the present disclosure combined with a battery cell.
FIG. 5 is a diagram illustrating an embodiment in which a gas guider is provided in a welding mask body of the present disclosure.
FIGS. 6 and 7 are diagrams illustrating an embodiment in which an insertion guide of the present disclosure includes a notch type gas inlet at a lower end.
FIG. 8 is a diagram illustrating an embodiment in which an insertion guide of the present disclosure includes a hole type gas inlet.
FIG. 9 is a diagram illustrating an embodiment in which a welding mask of the present disclosure includes a mesh member configured to cover a gas inlet.
FIG. 10 is a diagram illustrating an embodiment in which an insertion guide of the present disclosure is spaced a predetermined distance apart from an object.
FIGS. 11 and 12 are diagrams illustrating an embodiment in which a welding mask of the present disclosure includes a sealing member.
FIG. 13 is a diagram illustrating an embodiment in which a suction portion of a welding mask of the present disclosure is configured to be in direct communication with an insertion guide.
FIG. 14 is a diagram illustrating a circulation path of a purging gas and a discharge path of impurities occurring in welding, in a welding mask of the present disclosure including a laser passage portion, a purging gas injection portion and a suction portion.

### BEST MODE

Hereinafter, an exemplary embodiment of the present disclosure will be described in detail with reference to the accompanying drawings. Prior to the description, it should be understood that the terms or words used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the embodiments described herein and the illustrations in the drawings are just an exemplary embodiment of the present disclosure and do not fully describe the technical aspects of the present disclosure, so it should be understood that a variety of other equivalents and modifications could have been made thereto at the time of filing the patent application.

Prior to describing a welding mask 100 of the present disclosure, an exemplary structure of a battery cell 200 including a target object for laser welding using the welding mask 100 of the present disclosure will be described.

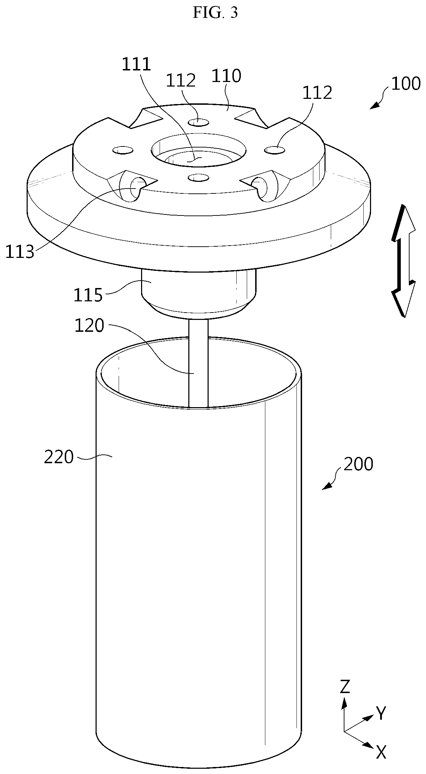

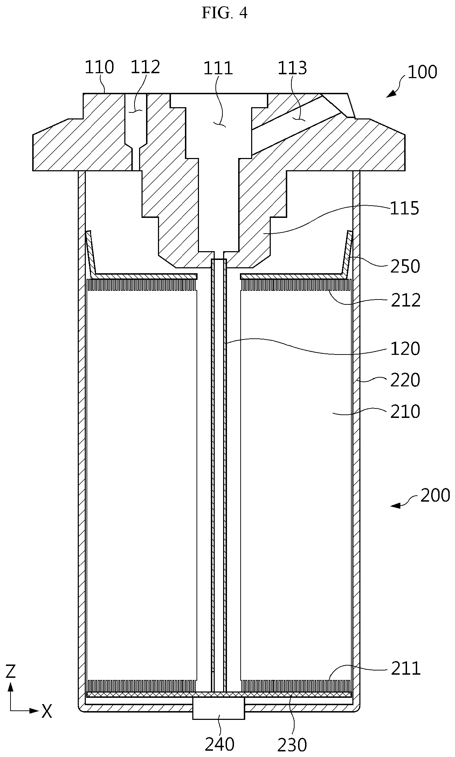

FIG. 3 is a diagram showing the appearance of the welding mask of the present disclosure, and FIG. 4 is a diagram showing the internal structure of the welding mask of the present disclosure combined with the battery cell.

Referring to FIGS. 3 and 4, the welding mask 100 according to an embodiment of the present disclosure is a tool for performing laser welding on the object disposed inside of the battery cell 200, and may be coupled to the top of the battery cell 200 after it moves down above from the battery cell 200. The laser welding process using the welding mask 100 of the present disclosure may be performed while a housing 220 of the battery cell 200 is open, not closed.

The battery cell 200 may be, for example, a cylindrical battery cell 200. The battery cell 200 may include an electrode assembly 210, the housing 220, a current collector plate (a first current collector plate) 230 and a terminal 240. The electrode assembly 210 may be a jellyroll type electrode assembly having a winding center hole at the center. The housing 220 may be configured to accommodate the electrode assembly 210 through an open portion on top. The current collector plate (the first current collector plate) 230 may be coupled to the lower end of the electrode assembly 210. The current collector plate (the first current collector plate) 230 may be coupled to a first noncoated portion 211 at the lower end of the electrode assembly 210. **In** this case, the current collector plate (the first current collector plate) 230 may be between the electrode assembly 210 and a closed portion of the housing 220 opposite the open portion of the housing 220.

The laser welding process using the welding mask 100 of the present disclosure may be a welding process for coupling the current collector plate (the first current collector plate) 230 of the battery cell 200 to the terminal 240. That is, in the present disclosure, the object may include the current collector plate (the first current collector plate) 230 and the terminal 240. For example, the terminal 240 may be fixed to the housing 220 through the closed portion on bottom of the housing 220. **In** this case, when a combination of the electrode assembly 210 and the current collector plate (the first current collector plate) 230 is inserted into the housing 220 through the top open portion of the housing 220 and the current collector plate (the first current collector plate) 230 and the terminal 240 come into contact with each other, the current collector plate (the first current collector plate) 230 and the terminal 240 may be welded by laser emission to the current collector plate (the first current collector plate) 230 through the winding center hole of the electrode assembly 210.

Meanwhile, the battery cell 200 may further include a current collector plate (a second current collector plate) 250. The current collector plate (the second current collector plate) 250 may be coupled to the upper end of the electrode assembly 210. The current collector plate (the second current collector plate) 250 may be coupled to a second noncoated portion 212 at the lower end of the electrode assembly 210. The current collector plate (the second current collector plate) 250 may have a current collector plate hole at a location corresponding to the winding center hole not to cover the winding center hole of the electrode assembly 210. **In** this case, for example, after a combination of the electrode assembly 210 and the pair of current collector plates 230, 250 is inserted into the housing 220 through the top open portion of the housing 220, the current collector plate (the first current collector plate) 230 and the terminal 240 may be welded by laser emission through the winding center hole of the electrode assembly 210 as described above.

While the battery cell 200 including the object in the laser welding process using the welding mask 100 of the present disclosure has been hereinabove described, in the laser welding using the welding mask 100 of the present disclosure, the object is not limited to the current collector plate (the first current collector plate) 230 and the terminal 250 of the battery cell 200 having the above-described structure. That is, any object disposed at the exit of the winding center hole opposite the entrance of the winding center hole of the electrode assembly 210 of the battery cell 200 where the laser enters may be a target object for laser welding using the welding mask 100 of the present disclosure.

Referring to FIGS. 3 and 4, the welding mask 100 according to an embodiment of the present disclosure may include a welding mask body 110 and an insertion guide 120.

The welding mask body 110 may include a laser passage portion 111 configured to allow the passage of the laser emitted into the housing 220 of the battery cell 200. The welding mask body 110 may be configured to cover the open portion on a side of the housing 220. The insertion guide 120 may have a hollow structure to allow the laser to pass therethrough. The insertion guide 120 may be connected to the laser passage portion 111. An internal space of the insertion guide 120 may be in communication with an internal space of the laser passage portion 111. The insertion guide 120 is configured to be inserted into the winding center hole of the electrode assembly 210 received in the housing 220.

According to this configuration of the welding mask 100, the laser coming from outside of the battery cell 200 may pass through the laser passage portion 111 and the insertion guide 120, and arrive at the object through the winding center hole of the electrode assembly 210. In addition, the insertion guide 120 may act as a mask between the laser and the inner wall of the winding center hole, thereby preventing laser induced damage to the electrode assembly 210 due to errors in the settings of the device for laser emission. Moreover, it is possible to prevent damage to the electrode assembly 210 by the contact between impurities that may occur in the laser welding process, for example, weld spatter and welding fumes and the inner wall of the winding center hole and/or metal impurities from causing shorts in the electrode assembly 210.

The laser passage portion 111 may have a shape of a hole that passes through the welding mask body 110. The entrance of the laser passage portion 111 may have a larger width than the exit. According to this configuration of the welding mask 100, it is possible to easily insert a laser emitter (not shown) into the laser passage portion 111. Meanwhile, the width of the entrance of the laser passage portion 111 may refer to the maximum width of the entrance of the laser passage portion 111. Likewise, the width of the exit of the laser passage portion 111 may refer to the maximum width of the exit of the laser passage portion 111. In case that the entrance and/or the exit of the laser passage portion 111 is approximately circular, the width of the entrance and/or the width of the exit may be defined as the inner diameter of the entrance and/or the inner diameter of the exit.

The laser passage portion 111 may be present at approximately the center of the welding mask body 110. When the welding mask body 110 covers the top open portion of the housing 220, the laser passage portion 111 may be disposed at a location corresponding to the winding center hole of the electrode assembly 210. According to this configuration of the welding mask 100, it is easy to prevent the laser passing through the laser passage portion 111 from coming into contact with the inner wall of the insertion guide 120 inserted into the winding center hole of the electrode assembly 210.

Referring to FIG. 4, the insertion guide 120 may be inserted through the entrance of the winding center hole of the electrode assembly 210 and extended to the exit of the winding center hole opposite the entrance. According to this configuration of the welding mask 100, it is possible to protect the electrode assembly 210 from the laser and the impurities occurring in laser welding over the whole area along the extension direction (parallel to the Z axis) of the winding center hole of the electrode assembly 210. The impurities occurring in welding may include at least one of weld spatter or welding fumes.

Referring to FIGS. 3 and 4, the welding mask body 110 includes a gas injection portion 112. The gas injection portion 112 is configured to inject a purging gas into the housing 220 through the welding mask body 110. According to this configuration of the welding mask 100, it is possible to easily inject the purging gas into the housing 220. The purging gas injected into the housing 220 may decrease the oxygen concentration inside the housing 220 of the battery cell 200. During the laser welding, when the oxygen concentration inside the housing 220 is lower than a predetermined level, it is possible to prevent a fire in the housing 220. In addition, when the purging gas is supplied to the weld area of the object, it is possible to prevent corrosion caused by oxidation of the object.

The gas injection portion 112 may have a shape of a hole that passes through the welding mask body 110. For example, a gas injector (not shown) may be inserted into the gas injection portion 112. A plurality of gas injection portions 112 may be included, and in this case, the plurality of gas injection portions 112 may be arranged along the periphery of the laser passage portion 111. The purging gas may be, for example, N₂ gas. However, the type of the purging gas is not limited thereto, and the purging gas may include a variety of inert gases.

Referring to FIGS. 3 and 4, the insertion guide 120 is configured to be spaced apart from the inner wall of the winding center hole of the electrode assembly 210. For example, when each of the winding center hole of the electrode assembly 210 and the insertion guide 120 is approximately cylindrical, the inner diameter of the winding center hole of the electrode assembly 210 may be larger than the outer diameter of the insertion guide 120. For example, the inner diameter of the winding center hole of the electrode assembly 210 may be approximately 5 mm to 8 mm, and the outer diameter of the insertion guide 120 may be smaller than the winding center hole of the electrode assembly 210 by approximately 1 mm to 2 mm.

When a gap is formed between the inner wall of the winding center hole of the electrode assembly 210 and the outer peripheral surface of the insertion guide 120, the purging gas fed into the housing 220 through the open portion of the housing 220 may be supplied to the object through the gap. The purging gas supplied to the object may decrease the oxygen concentration at or near the object during laser welding.

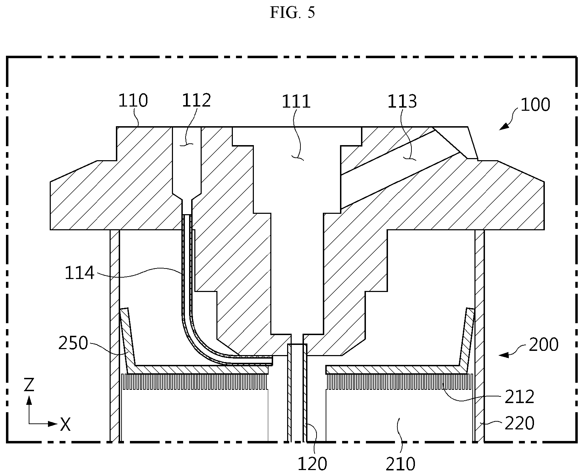

FIG. 5 is a diagram illustrating an embodiment in which a gas guider is provided in the welding mask body of the present disclosure.

Referring to FIG. 5, the welding mask 100 may include the gas guider 114 configured to guide the flow of purging gas. The gas guider 114 may be configured to guide the flow of the purging gas in a direction toward the gap between the inner wall of the winding center hole of the electrode assembly 210 and the insertion guide 120.

When the welding mask 100 includes the gas guider 114, the supply of the purging gas injected into the housing 220 through the gas injection portion 112 may be concentrated in the space between the inner wall of the winding center hole and the insertion guide 120. Accordingly, it is possible to decrease the oxygen concentration at or near the object more efficiently.

Meanwhile, as shown in FIG. 5, the welding mask body 110 may include a body extended portion 115 extended from the lower surface toward the internal space of the housing 220. In this case, when the welding mask body 110 comes into close contact with the top of the housing 220, the body extended portion 115 may be configured to be spaced apart from the electrode assembly 210 or the current collector plate (the second current collector plate) 250. When the welding mask body 110 includes the body extended portion 115, the gas guider 114 may be extended from the exit of the gas injection portion 112 to or near the entrance of the winding center hole of the electrode assembly 210 through the space between the body extended portion 115 and the current collector plate (the second current collector plate) 250 or between the body extended portion 115 and the electrode assembly 210.

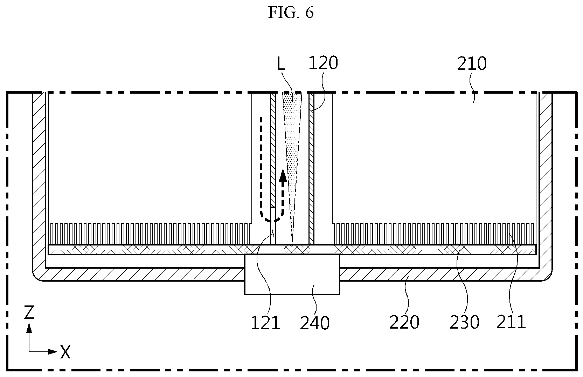

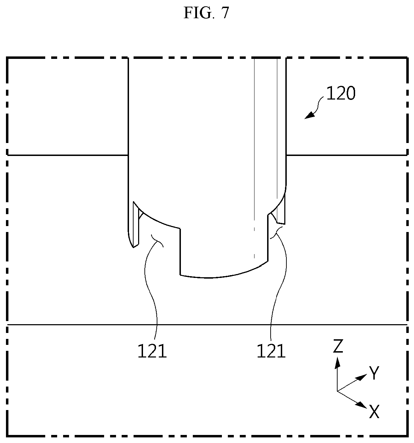

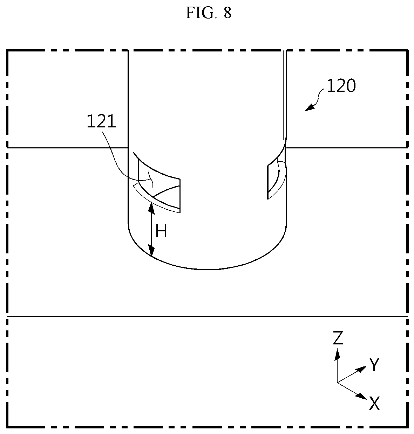

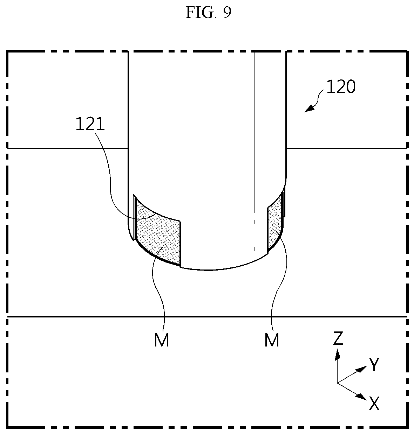

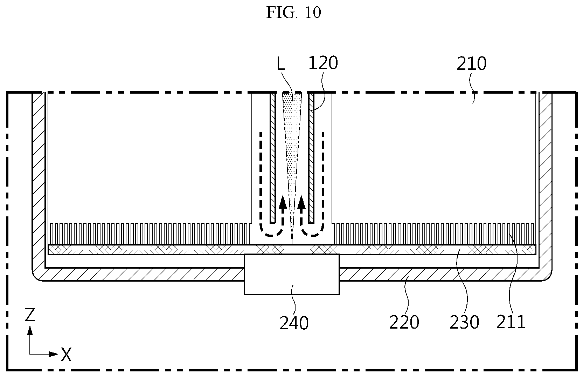

FIGS. 6 and 7 are diagrams illustrating an embodiment in which the insertion guide of the present disclosure includes a notch type gas inlet at the lower end, and FIG. 8 is a diagram illustrating an embodiment in which the insertion guide of the present disclosure includes a hole type gas inlet. Additionally, FIG. 9 is a diagram illustrating an embodiment in which the welding mask of the present disclosure includes a mesh member configured to cover the gas inlet, and FIG. 10 is a diagram illustrating an embodiment in which the insertion guide of the present disclosure is spaced a predetermined distance apart from the object.

Referring to FIGS. 6 to 10 together with FIGS. 3 and 4, the insertion guide 120 may be configured to guide the flow of the purging gas fed into the gap between the inner wall of the winding center hole of the electrode assembly 210 and the insertion guide 120. FIGS. 6 to 10 are diagrams showing exemplary shapes of the configuration of the insertion guide 120.

According to this configuration of the insertion guide 120, the purging gas fed into the housing 220 through the gas injection portion 112 may be fed into the insertion guide 120 through the gap between the winding center hole and the insertion guide 120. Accordingly, the purging gas may reduce the oxygen concentration of the weld area of the object to which the laser L is emitted.

Referring to FIG. 6, the insertion guide 120 may include at least one gas inlet 121. **In** this case, the purging gas fed through the gap between the inner wall of the winding center hole and the outer peripheral surface of the insertion guide 120 may be fed into the internal space of the insertion guide 120 through the gas inlet 121. For example, the gas inlet 121 may have a notched shape in the upward direction from the lower end of the insertion guide 120. When the gas inlet 121 is present at the lowest end of the insertion guide 120, the supply of the purging gas fed into the insertion guide 120 may be concentrated in the weld area of the object to which the laser L is emitted, thereby efficiency forming an inert atmosphere at the weld area.

Referring to FIG. 7, a plurality of gas inlets 121 may be included. The plurality of gas inlets 121 may be spaced apart from each other along the lower periphery of the insertion guide 120. When the plurality of gas inlets 121 is included, it is possible to feed the purging gas into the internal space of the insertion guide 120 more smoothly.

Referring to FIG. 8, as opposed to FIGS. 6 and 7, the gas inlet 121 may be spaced a predetermined distance H apart in the upward direction from the lowest end of the insertion guide 120. **In** this case, it is possible to minimize the spattering of impurities occurring in laser welding outward from the insertion guide 120. The plurality of gas inlets 121 may be included, and in this case, the plurality of gas inlets 121 may be spaced apart from each other along the circumferential direction of the insertion guide 120.

Meanwhile, in this embodiment, it may be desirable to limit the height H of the gas inlet 121 below a predetermined level. When considering only the function of the insertion guide 120 as a shield, the larger height H of the gas inlet 121 is better, but in case that the height H of the gas inlet 121 is too large, the purging gas fed into the insertion guide 120 may not be supplied to the bottom of the insertion guide 120 unless the circulation rate of the purging gas is lower than a predetermined level. Accordingly, in case that the height of the gas inlet 121 exceeds a predetermined level, the circulation rate of the purging gas may be decreased to increase the supply of the purging gas to the weld area, but this may lead to lower productivity. **In** this circumstance, the gas inlet 121 may be disposed at the height of approximately more than 0 and equal to or less than 10 mm from the lowest end of the insertion guide 120, preferably approximately more than 0 and equal to or less than 15 mm, and more preferably approximately more than 0 and equal to or less than 20 mm.

Meanwhile, when the insertion guide 120 of the present disclosure includes the gas inlet 121 as shown in FIGS. 6 to 8, the lowest end of the insertion guide 120 may come into contact with the object. **In** this case, the insertion guide 120 may act as a shield to prevent impurities occurring in laser welding from spattering toward the electrode assembly 210 all over the areas except the area in which the gas inlet 121 is present, thereby effectively preventing damage to the electrode assembly 210. The lowest end of the insertion guide 120 is not in contact with the object, and may be spaced apart from the object, and in this case, when considering the function of the insertion guide 120 as a shield, it may be desirable to form a microgap between the lowest end of the insertion guide 120 and the object.

Referring to FIG. 9, the welding mask 100 (see FIG. 4) of the present disclosure may further include a mesh member M. The mesh member M may be configured to cover the gas inlet 121. When the mesh member M covers the gas inlet 121, the purging gas may be smoothly fed into the insertion guide 120 through the small holes in the mesh member M, while impurities including weld spatter and/or welding fumes occurring in the weld area inside of the insertion guide 120 do not easily leak out of the insertion guide 120. Accordingly, it is possible to form an inert atmosphere at the weld area and prevent damage to the electrode assembly 210.

Meanwhile, referring to FIG. 10, the lowest end of the insertion guide 120 may be spaced apart from the object. The insertion guide 120 may not have the gas inlet 121. In this case, the purging gas be only fed into the insertion guide 120 between the gap between the lowest end of the insertion guide 120 and the object.

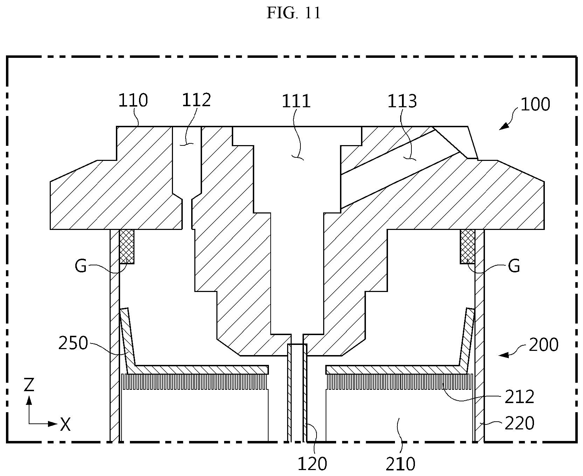

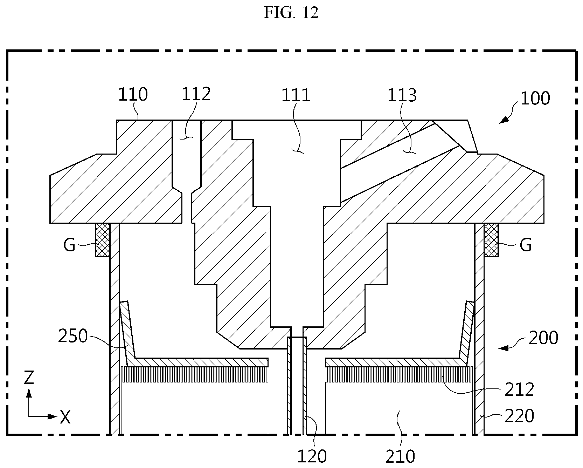

FIGS. 11 and 12 are diagrams illustrating an embodiment in which the welding mask of the present disclosure includes a sealing member.

Referring to FIGS. 11 and 12, the welding mask 100 may further include the sealing member G configured to improve sealability at the coupled part between the welding mask body 110 and the housing 220. When the sealing member G is included, the inside of the housing 220 of the battery cell 200 may be sealed up during the laser welding process. Accordingly, it is possible to prevent the purging gas supplied into the housing 220 from leaking out through the coupling interface between the welding mask body 110 and the top of the housing 220.

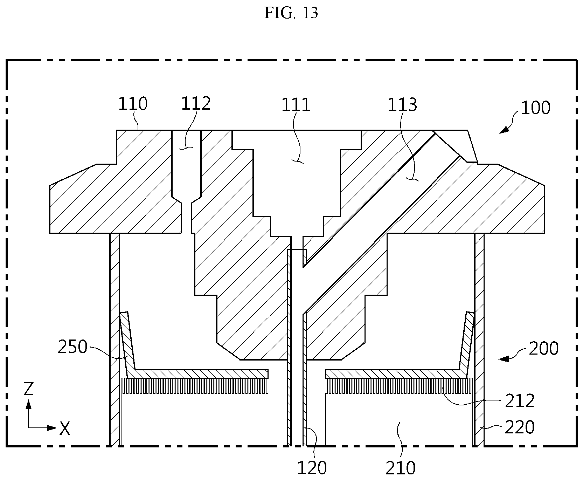

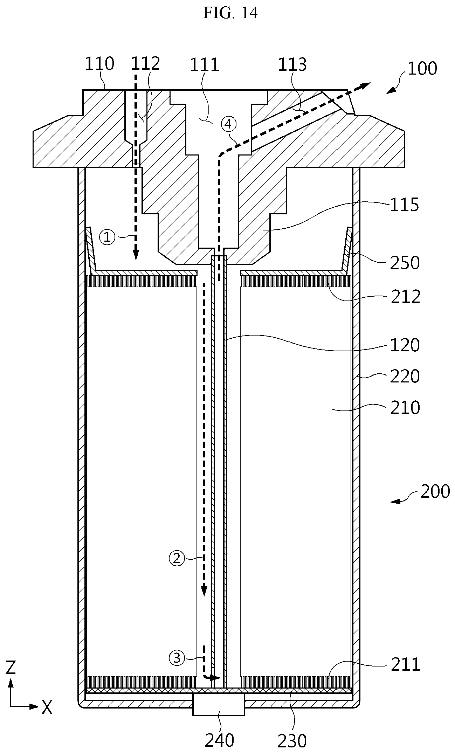

The sealing member G may be made of, for example, a rubber having elastic properties. However, the material of the sealing member G is not limited thereto, and any material that can improve sealability when interposed between objects may be used for the sealing member G of the present disclosure. Although the drawings of the present disclosure show the sealing member G in close contact with the outer peripheral surface of the upper end area of the housing 220 (see FIG. 13) and the sealing member G in close contact with the inner peripheral surface of the upper end area of the housing 220 (see FIG. 14) respectively, the present disclosure is not limited to this embodiment. The sealing member G may be configured to come into close contact with the inner peripheral surface and the outer peripheral surface of the upper end area of the housing 220. Alternatively, the sealing member G may be configured to be interposed between the topmost of the housing 220 and the lower surface of the welding mask body 110.

Referring to FIGS. 3 and 4, the welding mask body 110 of the present disclosure may include a suction portion 113. The suction portion 113 may be configured to be in communication with the internal space of the insertion guide 120. When the welding mask body 110 includes the suction portion 113, it is possible to smoothly discharge impurities including weld spatter and/or welding fumes occurring in the insertion guide 120 by laser welding.

The suction portion 113 may have a shape of a hole that passes through the welding mask body 110. For example, a suction device may be inserted into the suction portion 113. When suction is performed through the suction portion 113 while injecting the purging gas through the gas injection portion 112 as described above, impurities occurring in laser welding may be discharged through the suction portion 113, and the purging gas may be allowed to circulate. A plurality of suction portions 113 may be included. In this case, the plurality of suction portions 113 may be disposed along the periphery of the laser passage portion 111. When impurities occurring in laser welding are discharged through the suction portion 113, not through the laser passage portion 111, the device for laser emission and the device for suction may be installed in the welding mask body 110 at different locations, thereby preventing the interference between the two devices.

Referring to FIG. 4, the suction portion 113 may be configured to be in direct communication with the laser passage portion 111. In this case, impurities occurring in laser welding may be discharged through the suction portion 113 via the internal space of the insertion guide 120 and the internal space of the laser passage portion 111.

FIG. 13 is a diagram illustrating an embodiment in which the suction portion of the welding mask of the present disclosure is configured to be in direct communication with the insertion guide.

Referring to FIG. 13, as opposed to FIG. 4, the suction portion 113 may be configured to directly connect to the insertion guide 120. In this case, impurities occurring in laser welding does not pass through the laser passage portion 111 and may be discharged through the internal space of the suction portion 113 from the internal space of the insertion guide 120. When impurities occurring in laser welding are allowed to exit without passing through the laser passage portion 111, it is possible to prevent errors in the focal length of the laser that may occur due to the interference of the impurities and the laser.

FIG. 14 is a diagram illustrating a circulation path of purging gas and a discharge path of impurities occurring in welding, in the welding mask of the present disclosure including the laser passage portion, the purging gas injection portion and the suction portion.

Referring to FIG. 14, when the welding mask body 110 includes the laser passage portion 111, the gas injection portion 112 and the suction portion 113 independently, the purging gas may enter and exit the housing 220 along paths ①~④. That is, the purging gas may be fed into the housing 220 along the path ① and transported into the gap between the inner wall of the winding center hole and the insertion guide 120 along the path ② and then into the insertion guide 120 along the path ③, and leave the welding mask 100 and the battery cell 200 along the path ④. On the other hand, the impurities including weld spatter and/or welding fumes occurring at the bottommost of the winding center hole of the electrode assembly 210 may leave the welding mask 100 and the battery cell 200 along the path ④.

According to this configuration of the present disclosure, it is possible to decrease the oxygen concentration at the weld area by the concentrated supply of the purging gas to the weld area, and prevent damage to the electrode assembly 210 by impurities occurring in laser welding and weld quality degradation by impurity buildup in the weld area.

Subsequently, a method for welding the object disposed in the battery cell 200 using the welding mask 100 of the present disclosure will be described with reference to FIGS. 3 to 14.

The welding method according to an embodiment of the present disclosure relates to a method for welding the object disposed inside of the housing 220 of the battery cell 200. The welding method may include a welding mask mounting step (step A) of mounting the welding mask in the open portion of the housing 220 of the battery cell 200; and a welding step (step B) of welding the object inside of the housing 220 through the welding mask 100.

The step A is a step of moving down the welding mask 100 including the welding mask body 110 and the insertion guide 120 extended down from the welding mask body 110 to cover the open portion of the housing 220 of the battery cell 200, and inserting the insertion guide 120 into the winding center hole of the electrode assembly 210 in the housing 220. The step B is a step of welding the object at the closed portion of the housing 220 opposite the open portion by the emission of the laser L through the laser passage portion 111 of the welding mask body 110 and the insertion guide 120.

Accordingly, the laser coming from outside of the battery cell 200 may pass through the laser passage portion 111 and the insertion guide 120 and arrive at the object through the winding center hole of the electrode assembly 210. In addition, since the insertion guide 120 may act as a mask between the laser and the inner wall of the winding center hole, it is possible to prevent laser induced damage to the electrode assembly 210 in the event of errors in the settings of the device for laser emission. Moreover, it is possible to prevent damage to the electrode assembly 210 by the contact between impurities such as weld spatter, welding fumes occurring in the laser welding process and the inner wall of the winding center hole and/or metal impurities from causing shorts in the electrode assembly 210.

In addition to the above-described two steps, the welding method may further include a gas injection step (step C). The step C may be a step of injecting the purging gas into the housing 220 through the welding mask body 110. Accordingly, it is possible to decrease the oxygen concentration inside the housing 220 of the battery cell 200.

The step C may be a step of feeding the purging gas injected into the housing 220 into the gap between the inner wall of the winding center hole and the insertion guide 120 and then into the insertion guide 120. Accordingly, it is possible to effectively decrease the oxygen concentration at the weld area of the object to which the laser L is emitted.

The step C may be a step of allowing the purging gas fed through the gap between the inner wall of the winding center hole and the insertion guide 120 to be fed into the insertion guide 120, for example, through the gas inlet 121 of the insertion guide 120. Alternatively, the step C may be a step of allowing the purging gas fed through the gap between the inner wall of the winding center hole and the insertion guide 120 to be fed into the insertion guide 120 through the gap between the lowest end of the insertion guide 120 and the object.

The welding method may further include a suction step (step D) of sucking up impurities occurring in laser welding. That is, the welding method may include the steps A and B, or the steps A, B and C, or the steps A, B and D, or the steps A, B, C and D.

The step D may be a step of sucking up impurities including at least one of weld spatter or welding fumes occurring in the insertion guide 120 during the welding of the object through the welding mask body 110. Accordingly, it is possible to smoothly discharge the impurities including weld spatter and/or welding fumes occurring in the insertion guide 120 by laser welding.

The step D may be a step of sucking up impurities through the suction portion 113 configured to be in communication with the insertion guide 120. The step D may be, for example, a step of carrying out the suction through the suction portion 113 configured to be in direct communication with the laser passage portion 111. Alternatively, the step D may be a step of carrying out the suction through the suction portion 113 configured to be in direct communication with the insertion guide 120. It is possible to prevent errors in the laser focal length by the interference of the impurities and the laser when impurities are forced out by suction without passing through the laser passage portion 111.

While the present invention has been hereinabove described with regard to a limited number of embodiments and drawings, the present invention is not limited thereto and it is obvious to those skilled in the art that various modifications and changes may be made thereto within the scope of the present invention as defined in the appended claims.

### [Description of Reference Numerals]

100: Welding mask
110: Welding mask body
111: Laser passage portion
112: Purging gas injection portion
113: Suction portion
114: Gas guider
115: Body extended portion
120: Insertion pipe
121: Gas inlet
M: Mesh member
G: Sealing member
L: Laser
200: Battery cell
210: Electrode assembly
211: First noncoated portion
212: Second noncoated portion
220: Housing
230: Current collector plate (First current collector plate)
240: Terminal
250: Current collector plate (Second current collector plate)

## Claims

1. A welding mask (100), comprising
a welding mask body (110) having a laser passage portion (111) configured to allow a laser (L) emitted into a housing (220) of a battery cell (200) to pass therethrough, the welding mask body (110) configured to cover an open portion on a side of the housing (220),
**characterised in that**:
the welding mask body (110) includes a gas injection portion (112) configured to inject a purging gas into the housing (220) through the welding mask body (110), and wherein the insertion guide (120) is configured to be spaced apart from an inner wall of the winding center hole and; and
wherein the welding mask (100) further comprises an insertion guide (120) having a hollow structure, connected to the laser passage portion (111), and configured to be inserted into a winding center hole of an electrode assembly (210) received in the housing (220),
and **in that**:
the insertion guide (120) is configured to allow the purging gas fed into a gap between the inner wall of the winding center hole and the insertion guide (120) to be fed into the insertion guide (120).

2. The welding mask (100) according to claim 1, wherein the laser passage portion (111) has a larger width at an entrance than at an exit.

3. The welding mask (100) according to claim 1, wherein the insertion guide (120) is inserted through an entrance of the winding center hole and extended to an exit of the winding center hole opposite the entrance.

4. The welding mask (100) according to one of the preceding claims, wherein the welding mask (100) further includes a gas guider (114) configured to guide a flow of the purging gas in a direction toward a gap between the inner wall of the winding center hole and the insertion guide (120).

5. The welding mask (100) according to one of the preceding claims, wherein the insertion guide (120) includes at least one gas inlet (121).

6. The welding mask (100) according to claim 5, wherein the gas inlet (121) has a notched shaped in an upward direction from a lowest end of the insertion guide (120).

7. The welding mask (100) according to claim 5, wherein the gas inlet (121) is spaced a predetermined distance (H) in the upward direction apart from the lowest end of the insertion guide (120).

8. The welding mask (100) according to claim 5, wherein the welding mask (100) further includes a mesh member (M) configured to cover the gas inlet (121).

9. The welding mask (100) according to one of the preceding claims , wherein the lowest end of the insertion guide (120) is spaced apart from the object to be welded.

10. The welding mask (100) according to one of the preceding claims, wherein the welding mask (100) further includes a sealing member (G) configured to improve sealability at a coupled part of the welding mask body (110) and the housing (220).

11. The welding mask (100) according to claim 1, wherein the welding mask body (110) further includes a suction portion (113) in communication with an internal space of the insertion guide (120).

12. The welding mask (100) according to claim 11, wherein the suction portion (113) is in direct communication with an internal space of the laser passage portion (111).

13. The welding mask (100) according to one of the preceding claims, including a plurality of gas injection portions (112).

14. The welding mask (100) according to claim 13, wherein the plurality of gas injection portions (112) are arranged along the periphery of the laser passage portion (111).

15. The welding mask (100) according to claim 4, wherein
the welding mask body (110) includes a body extended portion (115) extended from a lower surface toward the internal space of the housing (220), and
wherein the gas guider (114) is extended from the exit of the gas injection portion (112) to or near the entrance of the winding center hole of the electrode assembly (210) through the space between the body extended portion (115) and the electrode assembly (210).

## Patentansprüche

1. Eine Schweißmaske (100), umfassend
einen Schweißmaskenkörper (110) mit einem Laserdurchgangsabschnitt (111), der so konfiguriert ist, dass ein in ein Gehäuse (220) einer Batteriezelle (200) emittierter Laser (L) hindurchtreten kann, wobei der Schweißmaskenkörper (110) dazu konfiguriert ist, einen offenen Abschnitt an einer Seite des Gehäuses (220) abzudecken,
wobei die Schweißmaske (100) ferner eine Einführungsführung (120) mit einer Hohlstruktur umfasst, die mit dem Laserdurchgangsabschnitt (111) verbunden ist und so konfiguriert ist, dass sie in eine Wickelzentrumsöffnung einer in dem Gehäuse (220) aufgenommenen Elektrodenanordnung (210) eingeführt werden kann, **dadurch gekennzeichnet, dass**:
der Schweißmaskenkörper (110) einen Gasinjektionsabschnitt (112) enthält, der dazu konfiguriert ist, ein Spülgas durch den Schweißmaskenkörper (110) in das Gehäuse (220) einzublasen, und wobei die Einführungsführung (120) dazu konfiguriert ist, von einer Innenwand der Wickelzentrumsöffnung beabstandet zu sein; und dass:
die Einführungsführung (120) so konfiguriert ist, dass sie es ermöglicht, dass das Spülgas, das in einen Spalt zwischen der Innenwand der Wickelzentrumsöffnung und der Einführungsführung (120) eingeleitet wird, in die Einführungsführung (120) eingeleitet wird.

2. Schweißmaske (100) nach Anspruch 1, wobei der Laserdurchgangsabschnitt (111) an einem Eingang eine größere Breite als an einem Ausgang aufweist.

3. Schweißmaske (100) nach Anspruch 1, wobei die Einführungsführung (120) durch einen Eingang der Wickelzentrumsöffnung eingeführt und zu einem dem Eingang gegenüberliegenden Ausgang der Wickelzentrumsöffnung verlängert ist.

4. Schweißmaske (100) nach einem der vorhergehenden Ansprüche, wobei die Schweißmaske (100) ferner eine Gasführung (114) aufweist, die dazu konfiguriert ist, einen Strom des Spülgases in eine Richtung zu einem Spalt zwischen der Innenwand der Wickelzentrumsöffnung und der Einführungsführung (120) zu leiten.

5. Schweißmaske (100) nach einem der vorhergehenden Ansprüche, wobei die Einführungsführung (120) zumindest einen Gaseinlass (121) aufweist.

6. Schweißmaske (100) nach Anspruch 5, wobei der Gaseinlass (121) von einem untersten Ende der Einführungsführung (120) aus in Aufwärtsrichtung eine gekerbte Form aufweist.

7. Schweißmaske (100) nach Anspruch 5, wobei der Gaseinlass (121) in einem vorbestimmten Abstand (H) in der Aufwärtsrichtung von dem untersten Ende der Einführungsführung (120) beabstandet ist.

8. Schweißmaske (100) nach Anspruch 5, wobei die Schweißmaske (100) ferner ein Gitterelement (M) aufweist, das dazu konfiguriert ist, den Gaseinlass (121) abzudecken.

9. Schweißmaske (100) nach einem der vorhergehenden Ansprüche, wobei das unterste Ende der Einführungsführung (120) von dem zu schweißenden Objekt beabstandet ist.

10. Schweißmaske (100) nach einem der vorhergehenden Ansprüche, wobei die Schweißmaske (100) ferner ein Dichtungselement (G) aufweist, dazu konfiguriert ist, die Dichtigkeit an einem gekoppelten Teil des Schweißmaskenkörpers (110) und des Gehäuses (220) zu verbessern.

11. Schweißmaske (100) nach Anspruch 1, wobei der Schweißmaskenkörper (110) ferner einen Ansaugabschnitt (113) aufweist, der mit einem Innenraum der Einführungsführung (120) in Verbindung steht.

12. Schweißmaske (100) nach Anspruch 11, wobei der Ansaugbereich (113) in direkter Verbindung mit einem Innenraum des Laserdurchgangsbereichs (111) steht.

13. Schweißmaske (100) nach einem der vorhergehenden Ansprüche, mit einer Vielzahl von Gasinjektionsabschnitten (112).

14. Schweißmaske (100) nach Anspruch 13, wobei die Vielzahl von Gasinjektionsabschnitten (112) entlang des Umfangs des Laserdurchgangsabschnitts (111) angeordnet sind.

15. Schweißmaske (100) nach Anspruch 4, wobei
der Schweißmaskenkörper (110) einen Körpererweiterungsabschnitt (115) aufweist, der sich von einer unteren Fläche in Richtung des Innenraums des Gehäuses (220) erstreckt, und
wobei sich die Gasführung (114) vom Ausgang des Gasinjektionsabschnitts (112) bis zum oder in die Nähe des Eingangs der Wickelzentrumsöffnung der Elektrodenanordnung (210) durch den Raum zwischen dem verlängerten Körperabschnitt (115) und der Elektrodenanordnung (210) erstreckt.

## Revendications

1. Masque de soudage (100), comprenant
un corps de masque de soudage (110) doté d'une section de passage laser (111) configurée pour permettre à un laser (L) émis dans un boîtier (220) d'une cellule de batterie (200) de passer à travers, le corps de masque de soudage (110) étant configuré pour couvrir une partie ouverte sur un côté du boîtier (220),
le masque de soudage (100) comprenant en outre un guide d'insertion (120) avec une structure creuse, raccordé à la section de passage laser (111), et configuré pour être inséré dans un trou central d'enroulement d'un ensemble d'électrodes (210) reçu dans le boîtier (220),
**caractérisé en ce que** :
le corps du masque de soudage (110) comprend une section d'injection de gaz (112) configurée pour injecter un gaz de purge dans le boîtier (220) à travers le corps du masque de soudage (110), et le guide d'insertion (120) est configuré pour être espacé d'une paroi intérieure du trou central d'enroulement ; et
et **en ce que** :
le guide d'insertion (120) est configuré pour permettre au gaz de purge introduit dans un écart entre la paroi interne du trou central d'enroulement et le guide d'insertion (120) d'être introduit dans le guide d'insertion (120).

2. Masque de soudage (100) selon la revendication 1, la largeur de la partie de passage laser (111) étant plus grande à une entrée qu'à une sortie.

3. Masque de soudage (100) selon la revendication 1, le guide d'insertion (120) étant inséré à travers une entrée du trou central d'enroulement et se prolongeant jusqu'à une sortie du trou central d'enroulement face à l'entrée.

4. Masque de soudage (100) selon une des revendications précédentes, le masque de soudage (100) comprenant en outre un dispositif de guidage du gaz (114) configuré pour guider un flux du gaz de purge en direction d'un écart entre la paroi interne du trou central d'enroulement et le guide d'insertion (120).

5. Masque de soudage (100) selon une des revendications précédentes, le guide d'insertion (120) comprenant au moins une entrée de gaz (121).

6. Masque de soudage (100) selon la revendication 5, l'entrée de gaz (121) ayant une forme entaillée profilée vers le haut depuis une extrémité inférieure du guide d'insertion (120).

7. Masque de soudage (100) selon la revendication 5, l'entrée de gaz (121) étant espacée d'une distance prédéterminée (H) vers le haut depuis l'extrémité inférieure du guide d'insertion (120).

8. Masque de soudage (100) selon la revendication 5, le masque de soudage (100) comprenant en outre un élément maillé (M) configuré pour couvrir l'entrée de gaz (121).

9. Masque de soudage (100) selon une des revendications précédentes, l'extrémité inférieure du guide d'insertion (120) étant espacée de l'objet à souder.

10. Masque de soudage (100) selon une des revendications précédentes, le masque de soudage (100) comprenant en outre un élément d'étanchéité (G) configuré pour renforcer l'étanchéité au niveau d'une partie couplée du corps du masque de soudage (110) et du boîtier (220).

11. Masque de soudage (100) selon la revendication 1, le corps du masque de soudage (110) comprenant en outre une section d'aspiration (113) communiquant avec un espace interne du guide d'insertion (120).

12. Masque de soudage (100) selon la revendication 11, la section d'aspiration (113) communiquant directement avec un espace interne de la section de passage laser (111).

13. Masque de soudage (100) selon une des revendications précédentes, comprenant une pluralité de sections d'injection de gaz (112).

14. Masque de soudage (100) selon la revendication 13, la pluralité de sections d'injection de gaz (112) étant agencées le long du pourtour de la partie de passage laser (111).

15. Masque de soudage (100) selon la revendication 4,
le corps du masque de soudage (110) comprenant une partie prolongée du corps (115) s'étendant d'une surface inférieure vers l'espace interne du boîtier (220), et
le dispositif de guidage du gaz (114) s'étendant de la sortie de la section d'injection de gaz (112) jusqu'à l'entrée du trou central d'enroulement de l'ensemble d'électrodes (210), ou près de celle-ci, à travers l'espace entre la partie prolongée du corps (115) et l'ensemble d'électrodes (210).
